# EUROPEAN PATENT SPECIFICATION

(11) **EP 0 776 568 B1**
(45) Date of publication and mention of the grant of the patent: **01.10.2003**
(21) Application number: 95929282.2
(22) Date of filing: 12.07.1995
(51) Int. Cl.: H04M 3/42, H04L 12/16

(54) **PROCEDURE AT TELECOMMUNICATION SYSTEMS WHICH MAKES POSSIBLE A REDUCTION OF THE SIGNAL PROCESSING**
VERFAHREN IN EINEM FERNMELDESYSTEM ZUR VERRINGERUNG DER SIGNALVERARBEITUNG
PROCEDURE DANS UN SYSTEME DE TELECOMMUNICATION PERMETTANT DE REDUIRE LE TRAITEMENT DES SIGNAUX

(30) Priority: 19.08.1994 SE 9402765
(43) Date of publication of application: 04.06.1997
(73) Proprietor: TELIA AB, 123 86 Farsta (SE)
(72) Inventor: WICHTEL, Eric, S-217 47 Malmö (SE); WALTER, Patrik, S-227 30 Lund (SE)
(74) Representative: Hopfgarten, Nils
(86) International application number: SE9500850
(87) International publication number: WO96006497

(56) References cited:
- EP-A- 0 325 327
- EP-A- 0 477 627
- SE-B- 469 707
- US-A- 5 012 466

## Description

### TECHNICAL FIELD

The present invention relates to a device and a procedure at telecommunication system which makes possible a reduction of the signal processing in the mentioned system and which in addition allows debiting of parts of the costs for the negotiation procedure at the connection of two subscribers who want to make use of one in the system existing service which is possible to activate.

### STATE OF THE TECHNOLOGY

It has previously been suggested different ways and devices to initiate establishing of connection on telecommunication network which offers a number of different telecommunication services.

By the American patent document 5 125 025 is shown a method to prevent callback attempts from one fax to another when the receiving fax cannot receive a so called NSF (Non Standard Facsimile). The method implies that a connection must be performed. On the other hand reconnection attempts need not be done because the calling fax by then has received a message that called fax cannot receive an NSF. The present invention implies that an enquiry first is made (packet switched) and only after that connection is performed. In this way the traffic on the network is minimized. Full charge for "connection attempts" can, however, still be arranged if that is wanted.

By the American patent document 5 012 466 is shown a data base for storing of user identities, terminal identities and their service profiles. To administer all services of the higher order in such a central data base is absurd and besides uneconomical from signalling point of view.

Further is shown by the American patent document 0 477 627, which relates to an ISDN-network, that A transmits a set-upp message to B, for deciding the possibility of using required telecommunication services at B. The shown technology uses a communication connection equipment (KA) in the network for administration of telecommunication services (telephone, data, fax, telex etc) and also for conversion between the services. The present invention is distributed and therefore does not contain new complex network components type ka and is directed towards another type of services. The network only manage transmission of traffic/signalling and charging, a data base which administers all services of higher order does not exist. To administer all services of higher order in a central data base would be extremely complex and signal requiring for a purpose the present invention is intended for, and by that not achieve desired effect.

Also the American patent document 4 748 681 points out a technology within the field. The techology in this writing relates to ISDN on radio and implies that storing of information about possible services on a terminal is performed centrally. The present invention differs considerably from this by the information about service possibilities on a terminal being stored directly on the terminal in question.

EP-A-477 627 discloses a procedure for connecting communication unites in a service integrated communication network. The procedure direct a call for a certain service from a first communication unit to a second communication unit and check whether the certain service is available in the second communication unit. If there is no availability an expanded procedure check if there is another possible connection between the two units by other service.

SE-B-469 707 describes an invention, which relates to access rights for services in a telecommunication network, more particularly automatic access verification concerning the access right for a subscriber calling up telecommunication services via the telecommunication network. The calling subscriber's communication equipment sends a code to a called subscriber comprising the requested service. A controlling device of the called subscriber comprises detection means detecting the code. The code is compared with authorized codes stored in a storage unit. If the code of the calling subscriber is among the authorized codes, the call is connected.

### DESCRIPTION OF THE INVENTION

### TECHNICAL PROBLEM

Today there are many possibilites to communicate between different subscribers. Telephone, telefax, computers etc can communicate with each other via the telecommunication network. Sometimes it happens that a fax or the like is used for connection to a number where it is not known whether there on the receiving side is a device of the same type so communication can start, or if the telecommunication device is on. That results in that the network becomes unnecessarily loaded with signalling. To master this problem, that a certain application one is using as a subscriber gets in contact with the receiver's application in a correct manner without causing unnecessarily loading of the network is a problem which becomes more and more common. If, for instance, an A-subscriber wants to communicate with a B-subscriber by means of using a special application, a connection must first be established whereupon the A-application negotiates or investigates with the B-application whether the service exists at the B-subscriber, and only after that information can be exchanged between the subscribers. This procedure consequently costs signal space in the system, and also makes an unnecessarily high loading of the network. The object with the invention is therefore to effect one in relation to the state of the technology improved and more secure procedure to communicate between two subscribers at the using of different applications in the communication equipment.

Another object with the invention is to reduce the traffic signalling on the network.

One further aim with the invention is to give the transmitting subscriber information whether a connection is possible to a certain application at the receiver.

### THE SOLUTION

The above mentioned objects are attained by the invention showing the in the enclosed patent claims stated characteristics. The problem solution is shortly characterized in that, when a first subscriber signals to a second subscriber, identification is made in an identification unit. The identification aims at deciding whether the receiver's application is accessible for the transmitting subscriber. Further, the identification aims at deciding whether the application is accessible before the signal transmission starts. The signalling is performed by a special signal packet or data packet which contains transmitter information respective receiver information, and information about wanted service. The information can be bit rate, code alternative or other technical parameters which are required for transmission of a data packet.

The above mentioned identification unit contains circuits which identifies a transmitted data packet as belonging to certain special applications. It also effectuates real-time security of the requested with a logical queue function. After a certain time the queue function is deactivated. The identificaion unit is placed in the subscriber's terminal or in the subscriber's communication equipment, thus making a distributed solution Further the identification unit (SSNU) communicates bi-directionally via a network interface to a network and receives signal packets from the application requested service, respectively at which the application and requested service bi-directionally communicate via a service interface, at which the user and the requested service bi-directionally communicate via the service interface and user and application bi-directionally communicate via user application interface.

### ADVANTAGES

In order to give subscribers a better opportunity to use the applications which exist to-day, and those which will be available in the future, a better security at using and in giving the transmitting subscribers answer messages so they can see what the fault is that makes a prospective communication connection impossible to perform.

Further the invention implies that one does not get unnecessary signalling on the network. The load on the network is continuously increasing and the procedure according to the invention causes that unnecessary loading is avoided. Only the load which meets a receiver and consequently is wanted will load the network.

### DESCRIPTION OF FIGURES

The invention shall now be described by means of non-confining embodiments and with reference to enclosed schematically performed drawings. In the figures:
Figure 1 shows a communication between two subscribers according to the invention.
Figure 2 shows communication paths with startingpoint from the identification unit.

### PREFERRED EMBODIMENT

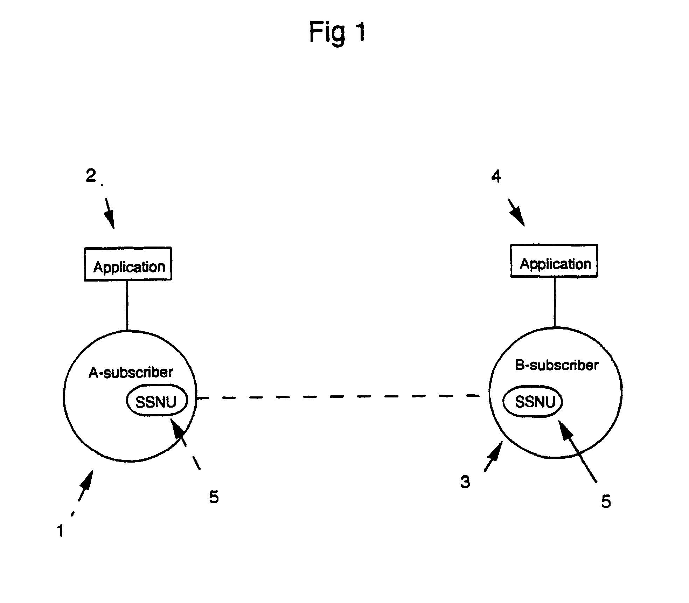

Figure 1 shows how an A-subscriber communicates with a B-subscriber 3. If an A-subscriber wants to communicate with a B-subscriber 3 by means of a special application 4, a connection must first be established whereupon the A-application 2 negotiates with the B-application 4 about whether the service exists at the B-subscriber 3, and only after that information can be exchanged between the subscribers. This negotiation takes place in an identification unit 5 which is located at each subscriber. When a service is wanted, a special signalling packet is transmitted, here called A-ssn, from the A- to the B-subscriber. The packet which is handled as a signalling packet or data packet, contains transmitter- respective receiver information and information about wanted service. The receiver sends back a packet, here called B-ssn to inform about the access to required service, and available alternatives such as bit rate, code alternative etc. The "possibility bits" is the condition for restricted signalling as a "detailed answer" leads to that no more inquires need to be done before the terminals can communicate according to best common denominator.

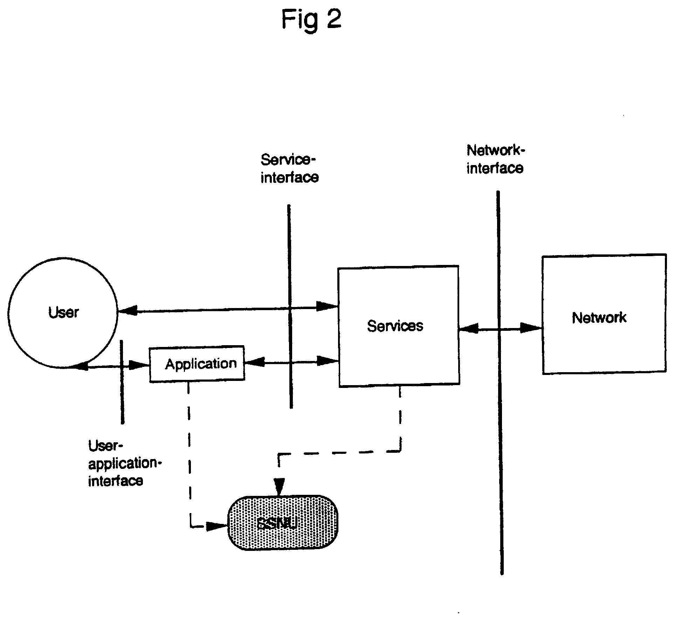

Figure 2 shows how the communication is performed over a network interface, user interface and a user application interface.

The identification unit (SSNU) is bi-directionally communicable via a network interface to a network and receives the signal packet from the application respective requested/selected service, at which the application and requested/selected service is bi-directionally communicable via a service interface, at which the user and requested/selected service is bi-directionally communicable via a service interface and user and application constitute bi-directional communication via user application interface. SSNU gets information about which information and services that are available on the terminal and can after that directly answer the inquiry packet (SSN). Some higher services can exist implemented direct on the terminal.

In the third generation's mobile networks, the user mobility will be important. This means that each user shall be able to connect himself to the network via, broadly speaking, any terminal. An A-subscriber who tries to use an application towards the B-subscriber's application of the same kind, connects himself towards the B-subscriber by means of a unique user number. The problem in this is that A does not know to which terminal B is connected and by that neither know if the application is available on the terminal used by B.

There can be several users connected to a terminal. This implies that a terminal may already be occupied when an "outsider user" tries to use his application towards corresponding application on another terminal.

Even if one has a data base which contains service profiles, or if checking is made within a B-terminal, the problem remains to real-time secure that resource which possibly has been found to be free/accessible, so the service will not have time to be taken away or be occupied by another user before the transaction which the requested concerned has had time to be performed. The problem also exists in person communication, but person communication makes use of a network conglomerat where the invention only can be applied in limited network parts. The use is consequently limited there, but should absolutely not be neglected.

Negotiation of carrier services and telecommunication services are controlled by the intelligent network. This can also apply to some additional services. ISDN, as an example, makes use of the function Terminal Capability Identifier (TCI) for performing the functions in a very primitive manner (can or can not the node receive a fax, for instance).

The invention is based on an identification unit at the A- respective B-subscriber. The identification unit is called SSNU (SSN Unit). A special signalling packet/packet (SSN Secondary Service Negotiator) is used on the signalling channel or on a packet switched data channel (not circuit switched). (Two embodiments).

SSN is used as a signalling packet or data packet in the network, but the invention is characterized by the fact that it originates from a point outside the network and has a destination outside the network. The signal packet is sent from one terminal to another terminal.

Two types of SSN and a unique numbering sequence for services are included in the invention. The data content in SSN is described below in a carrier service independent way.

A-SSN is a SSN which is transmitted from A- to B-subscriber for making a request about the access to a specific service, in the case when the intelligent network does no have a corresponding TCI.

The problem of an application being occupied (many users connected to one terminal) by a user connected to the terminal can also be solved by the identification unit. The SSNU can have information about the fact that certain applications may already be occupied.

Owing to the fact that the invention can be realised on a higher level than in the network, it can be implemented "supplier uniquely" if so is desired, and by that give operator advantages. Of course it can also be allowed generally and be accepted due to the traffic structure improvement it gives rise to.

Another operator choice is whether A-SSN shall be debited the customer or not. Parts of the services can also be free of charge, the rest subject to a charge.

Remains the real time safeguarding of requested service, if it is accessible at the time of request. The function is primarily interesting for networks which allows more than one logical channel at the same time to B. Access to the resource is locally secured at A at request, and at B at a positive answer on the request. The resource safegurading is connected to a timeout to prevent locking.

A local register, unique for each separate user, takes care of each terminal's momentary service possibilities.

Non-active applications can have a service existing in the table which activates the application and which at activation introduces more services in the table.

Active applications list their services, accessible from A, in the table and attend to the updating of the contents themselves. That the updating of the service table is really attended to, is controlled by a table managing function which checks that the application has updated the s/m-part before timeout.

The administration from the application's side is performed regularly when neccessary or latest within a prescribed time. The same procedure is valid for operative systems, which from a communication perspective runs as "application".

For use primarily in the third generation's mobile communication systems (UMTS/FPLMTS), secondary in personal telephony, as negotiation preceding connection of a channel at the use of advanced services (inclusive application unique services).

A restriction exists with personal telephony which causes that use is possible only in the subnetworks which support the function.

B-SSN is the SSN which is transmitted from B- to A-subscriber as answer to an explicit request about the access of a specific service. Status indicates accessible/not accessible/temporarily not accessible etc; the possibility bits indicate by which alternative the service can be performed (bit rate, coding alternative etc). The possibility bits are a condition for restricted signalling as a "detailed answer" implies that no more requests need to be done before the terminals can communicate according to best common denominator.

The status/possibility field is indicated below as "s/m".

| | | | |
|---|---|---|---|
| Transmitter | Receiver | Wanted service | Status/possibilities |

A service can need support from a number of other services and an A-SSN can then contain many requests in the same packet.

| | | | | |
|---|---|---|---|---|
| Receiver | Transmitter | Wanted service | Wanted service | Wanted service |

The B-SSN packet will then look as follows:

| | | | | | |
|---|---|---|---|---|---|
| Transmitter | Receiver | Wanted service | s/m | Wanted service | s/m |

The numbering sequence is based on reserved prefix and consecutive numbers to these. Each network- or service operator and application manufacturer can apply for a prefix for himself in order to establish unique services. Each operator and application manufacturer will then have own consecutive numbers for their services. The prefix together with the consecutive number constitute a unique number in the number sequence.

### A short scenario as example of typical use:

An application which has been written for a PDA (Personal Digital Assistant, for instance Newton) makes use of advanced telecommunication services which are unique for just that application. The services act as "primitives" which are building up the communication between PDAs which both have that application or applications of that type. Other applications have no use of the information, and other receivers do not understand the information. Person A uses his application in such a way that his application need to send a primitive to the person B's Newton.

The invention is not restricted to the showed embodiments, but can be varied in an arbitrary way within the scope of the idea of invention as it is defined in the following patent claims.

## Claims

1. Method for reduction of signal processing in a telecommunication system, wherein a first subscriber (1) by means of the telecommunication system shall communicate with a second subscriber (3) with an application (4) at which connection is established via a telecommunication network, in that signalling is performed to the second subscriber (3) via an identification unit (5), which gives the first telecommunication subscriber (1) information whether the application (4) in question is available and whether it is accessible, before the signal transmission of the application starts, **characterised in that** the identification unit (5) is placed in the subscriber's terminal or communication equipment, wherein signalling is effectuated by a signalling packet or data packet which contains transmitter information and information about desired service, **in that** information whether the application (4) in question is accessible is provided by a signalling packet or data packet together with information about available alternatives, and **in that** a transmitting data packet is identified as belonging to applications in question by circuits contained in the identification unit (5), wherein real-time security of the requested service is effectuated with a logical queue function by said circuits of the identification unit (5).

2. Method according to claim 1, **characterized in that** the identification unit (SSNU) communicates bi-directionally via a network interface to the network and receives signal packets from the application and requested service, respectively, **in that** the application and requested service bi-directionally communicate via a service interface, and **in that** user and requested service bi-directionally communicate via the service interface and user and application bi-directionally communicate via a user application interface.

## Patentansprüche

1. Verfahren zum Verringern der Signalverarbeitung in einem Telekommunikationssystem, in dem ein erster Teilnehmer (1) mit Hilfe des Telekommunikationssystems mit einem zweiten Teilnehmer (3) mit einer Anwendung (4) kommunizieren soll, wobei Verbindung über ein Telekommunikationsnetz hergestellt wird, wobei die Signalisierung zum zweiten Teilnehmer (3) über eine Identifizierungseinheit (5) durchgeführt wird, die dem ersten Telekommunikationsteilnehmer (1) Information darüber gibt, ob die fragliche Anwendung (4) zur Verfügung steht und ob sie zugänglich ist, bevor die Signalübertragung der Anwendung beginnt, **dadurch gekennzeichnet, daß** die Identifizierungseinheit (5) im Endgerät oder der Kommunikationsausrüstung des Teilnehmers angeordnet ist, wobei das Signalisieren durch ein Signalisierpaket oder Datenpaket bewirkt wird, das Senderinformation und Information über gewünschten Dienst enthält, daß Information, ob die fragliche Anwendung (4) zugänglich ist, durch ein Signalisierpaket oder Datenpaket zusammen mit Information über zur Verfügung stehende Alternativen geschaffen oder geliefert wird, und daß ein sendendes Datenpaket als zu fraglichen Anwendungen gehörend durch Schaltungen identifiziert wird, die in der Identifizierungseinheit (5) enthalten sind, wobei Echtzeitsicherheit des angeforderten Dienstes mit einer logischen Schlangenfunktion oder Warteschlangenfunktion durch die Schaltungen der Identifizierungseinheit (5) bewirkt wird.

2. Verfahren nach Anspruch 1, **dadurch gekennzeichnet, daß** die Identifizierungseinheit (SSNU) in zwei Richtungen über eine Netzschnittstelle mit dem Netzwerk kommuniziert und Signalpakete von der Anwendung bzw. dem angeforderten Dienst empfängt, daß die Anwendung und der angeforderte Dienst in zwei Richtungen über eine Dienstschnittstelle kommunizieren, und daß der Benutzer und der angeforderte Dienst in zwei Richtungen über die Dienstschnittstelle kommunizieren und der Benutzer und die Anwendung in zwei Richtungen über eine Benutzeranwendungsschnittstelle kommunizieren.

## Revendications

1. Procédé pour la réduction du traitement de signal dans un système de télécommunication, dans lequel un premier abonné (1) au moyen d'un système de télécommunication communiquera avec un deuxième abonné (3) avec une application (4) vers laquelle une connexion est établie via un réseau de télécommunication, pour lequel la signalisation est transmise au second abonné (3) via une unité d'identification (5), qui donne au premier abonné (1) l'information indiquant si l'application (4) en question est disponible et si elle est accessible, avant que la transmission du signal de l'application ne commence, **caractérisé en ce que** l'unité d'identification (5) est placée dans le terminal ou l'équipement de communication de l'abonné, dans lequel la signalisation est effectuée par un paquet de signalisation ou un paquet de données qui contient les informations du transmetteur et les informations concernant le service désiré, **en ce que** l'information indiquant si l'application (4) en question est accessible est fournie par un paquet de signalisation ou un paquet de données ainsi que des informations concernant les alternatives possibles, et **en ce que** un paquet de données de transmission est identifié comme appartenant aux applications en question par des circuits contenus dans l'unité d'identification (5), dans lequel la sécurité en temps réel du service demandé est effectuée avec une fonction de file d'attente logique par lesdits circuits de l'unité d'identification (5).

2. Procédé selon la revendication 1, **caractérisé en ce que** l'unité d'identification (SSNU) communique de façon bi-directionnelle via une interface de réseau au réseau et reçoit des paquets de signal de l'application et du service demandé, respectivement, **en ce que** l'application et le service demandé communiquent de façon bi-directionnelle via une interface de service, et **en ce que** l'utilisateur et le service demandé communiquent de façon bi-directionnelle via l'interface de service et l'utilisateur et l'application communiquent de façon bi-directionnelle via une interface d'application utilisateur.
